# EUROPÄISCHE PATENTSCHRIFT

(11) **EP 3 431 421 B1**
(45) Veröffentlichungstag und Bekanntmachung des Hinweises auf die Patenterteilung: **31.08.2022**
(21) Anmeldenummer: 17182335.4
(22) Anmeldetag: 20.07.2017
(51) Int. Cl.: B65G 1/04, B65G 47/90

(54) **BEDIENGERÄT FÜR EINE KOMMISSIONIERVORRICHTUNG**
OPERATING DEVICE FOR A PICKING SYSTEM
APPAREIL DE COMMANDE POUR UN DISPOSITIF DE PRÉPARATION DE COMMANDES

(43) Veröffentlichungstag der Anmeldung: 23.01.2019
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 2 163 507
- EP-A1- 2 165 950
- WO-A1-2016/110530
- JP-A- H10 181 809
- JP-A- 2017 052 612

## Beschreibung

Die vorliegende Erfindung betrifft ein Bediengerät für eine Kommissioniervorrichtung, und insbesondere ein Bediengerät für eine Kommissioniervorrichtung mit horizontalen Lagerflächen zur Lagerung von Stückgütern, insbesondere Arzneimittelpackungen.

Aus dem Stand der Technik sind zahlreiche Bediengeräte für Kommissioniervorrichtungen zur automatischen Ein- und Auslagerung von Stückgütern, insbesondere Arzneimittelpackungen, bekannt.

Aus der EP 2 165 950 A1 ist beispielsweise ein Bediengerät mit einem Ablagetisch und über diesem angeordneten Klemmbacken bekannt. Die Klemmbacken sind schwenkbar an einem Kopfteil des Bediengerätes befestigt. Das Kopfteil umfasst eine Führungseinrichtung, die mit den Klemmbacken gekoppelt ist. Zum Ausführen einer Schwenkbewegung der Klemmbacken wird die Führungseinrichtung in Ein- bzw. Auslagerrichtung bewegt. Ein Nachteil des Bediengerätes ist es, dass dieses eine Vielzahl von Bauteilen aufweist, die für die Ausführung der Schwenkbewegung notwendig ist, was zu hohen Kosten für das Bediengerät führt. Die Ausführung der Führungseinrichtung und die Umsetzung einer Drehbewegung eines Antriebes in die Schwenkbewegung der Klemmbacken bedingt ferner, dass diese nur eine begrenzte Klemmkraft auf auszulagernde Stückgüter ausüben können. In den letzten Jahren sind aber zunehmend Arzneimittelpackungen mit größeren Maßen und höherem Gewicht auf dem Markt, so dass eine erhöhte Klemmkraft wünschenswert ist.

Aus der JP 2017 052612 A , welche die Merkmale des Oberbegriffs der Ansprüche 1 und 2 offenbart, ist ein Bediengerät für ein automatisiertes Warenlager bekannt. Das Bediengerät umfasst zwei Klemmbacken, die an zwei Halterungen befestigt sind und über einen Antrieb aufeinander und voneinander weg bewegbar sind. Aufgrund der Befestigung der Klemmbacken an den Halterungen ist ein Schwenken der Klemmbacken aber nicht möglich.

Aus der JP H10 181809 ist ebenfalls ein Bediengerät mit verfahrbaren Klemmbacken bekannt, die aber ebenfalls nicht schwenkbar sind.

Aus der WO 2016/110530 Al ist Bediengerät bekannt, welches zwei gegenüberliegende Stirnseiten aufweist, über welche Stückgüter auf das Bediengerät und von diesem auf einen Lagerplatz bewegbar sind.

Schließlich ist aus der EP 2 163 507 A1 ein Bediengerät mit zwei Klemmbacken bekannt, die aber nicht an Halterungen geschwenkt, sondern über zwei Klemmbackenführungen um eine Achse drehbar sind.

Es ist Aufgabe der vorliegenden Erfindung, ein konstruktiv einfaches Bediengerät mit schwenkbaren Klemmbacken bereitzustellen, mit welchem erhöhte Klemmkräfte erzeugt werden können.

Im Rahmen dieser Anmeldung wird regelmäßig der Begriff "Stückgut" bzw. "Arzneimittelpackung" verwendet, wobei von diesen Begriffen auch der jeweilige Plural umfasst sein soll. Mit dem erfindungsgemäßen Bediengerät kann ein Stückgut bzw. eine Arzneimittelpackung oder eine Mehrzahl von Stückgütern oder Arzneimittelpackungen gleichzeitig ein- und ausgelagert werden.

Die vorgenannte Aufgabe wird erfindungsgemäß gelöst durch ein Bediengerät mit den Merkmalen der Patentansprüche 1 oder 2. Das erfindungsgemäße Bediengerät für eine Kommissioniervorrichtung mit horizontalen Lagerflächen zur Lagerung von Stückgütern, insbesondere Arzneimittelpackungen, umfasst einen sich in einer ersten horizontalen Richtung (x) erstreckenden Ablagetisch mit einer Ein- und Auslagerungsseite, über welche Stückgüter bzw. Arzneimittelpackungen von bzw. auf eine Lagerfläche bewegt werden. Die vorgenannte erste horizontale Richtung entspricht der Ein- und Auslagerungsrichtung für Stückgüter und ist üblicherweise deckungsgleich mit der Längsachse des Bediengeräts. Über dem Ablagetisch sind zwei langgestreckte Klemmbacken mit einander zugewandten Klemmflächen angeordnet.

Das Bediengerät umfasst ferner eine Klemmbackenführungsanordnung mit einer Rahmenstruktur und zumindest einer ersten und einer zweiten Führung, die sich parallel zueinander und in der ersten horizontalen Richtung (x) beabstandet voneinander in einer zweiten horizontalen Richtung (y) quer zur ersten horizontalen Richtung (x) erstrecken (die zweite horizontale Richtung ist damit quer bzw. orthogonal zur Ein- und Auslagerungsrichtung).

Das Bediengerät selbst ist in Bezug auf die Ein- und Auslagerungsseite des Ablagetisches an der entgegengesetzten Seite des Ablagetisches angeordnet. Mit der ersten Führung ist hier die der Ein- und Auslagerungsseite zugewandte Führung gemeint. Bezogen auf die Ein- und Auslagerungsseite ist die zweite Führung parallel zu der ersten Führung hinter dieser angeordnet.

Die Klemmbackenführungsanordnung umfasst ferner zumindest vier mit den Führungen gekoppelte und in der zweiten horizontalen Richtung (y) angetriebene bzw. an den Führungen bewegbare Klemmbackenschlitten, wobei jeweils zwei erste Klemmbackenschlitten der ersten Führung und zwei zweite Klemmbackenschlitten der zweiten Führung zugeordnet sind und wobei jeweils zumindest zwei in der ersten horizontalen Richtung (x) beabstandete Klemmbackenschlitten mit einer Klemmbacke gekoppelt sind.

Schließlich umfasst das Bediengerät eine mit der Klemmbackenführungsanordnung gekoppelte Antriebseinheit, mit der die Klemmbackenführungseinrichtung in der ersten horizontalen Richtung (x) bewegbar ist.

Es ist also vorgesehen, dass jede Klemmbacke mit einer Mehrzahl von Klemmbackenschlitten gekoppelt ist, üblicherweise mit der Hälfte der vorhandenen Klemmbackenschlitten. Die Kopplungsstellen sind bezüglich der ersten horizontalen Richtung (x) (der Ein- und Auslagerungsrichtung) versetzt, so dass die Bewegung beispielsweise der ersten Klemmbackenschlitten in der zweiten horizontalen Richtung (y) aufeinander zu bei ortsfesten zweiten Klemmbackenschlitten ein Aufeinanderzuschwenken der Klemmbacken bewirkt.

Bei dem erfindungsgemäßen Bediengerät ist die Ansteuerung der Klemmbacken über die zumindest vier Klemmbackenschlitten sehr einfach und direkt ausgeführt, es ist keine Bewegung einer Führungseinrichtung in Ein- oder Auslagerungsrichtung notwendig, um die Schwenkbacken entgegen dieser Ein- oder Auslagerungsrichtung zu verschwenken. Durch die direkte Ansteuerung mit zumindest zwei Klemmbackenschlitten pro Klemmbacke können auch höhere Klemmkräfte aufgebracht werden. So ist es beispielsweise denkbar, die zumindest zwei Klemmbackenschlitten pro Klemmbacke zusammenwirkend agieren zu lassen (indem die beiden Klemmbackenschlitten bezogen auf die zweite horizontale Richtung (y) gegeneinander bewegt werden). Konstruktiv gesehen ist das erfindungsgemäße Bediengerät deutlich einfacher, und trotz dieser Einfachheit können erhöhte Klemmkräfte aufgebracht werden.

Erfindungsgemäß ist vorgesehen, dass die Klemmbackenführungsanordnung zumindest zwei mit einer Antriebseinheit gekoppelte Antriebselemente aufweist, wobei ein erstes Antriebselement mit den ersten Klemmbackenschlitten und ein zweites Antriebselement mit den zweiten Klemmbackenschlitten verbunden ist, wobei das erste und das zweite Antriebselement in der ersten horizontalen Richtung (x) beabstandet voneinander angeordnet sind. Bei dieser Ausführungsform werden die einer Führung zugeordneten Klemmbackenschlitten also mittels eines Antriebselements bewegt bzw. angetrieben, eine Zuordnung eines Antriebes zu einem Klemmbackenschlitten entfällt somit. Die Antriebselemente und die zugehörige Antriebseinheit können beliebig ausgebildet sein, solange eine Linearbewegung der Klemmbackenschlitten in der zweiten horizontalen Richtung an bzw. auf den Führungen gewährleistet ist.

Zum Antreiben bzw. Bewegen der Klemmbackenschlitten kommen beliebige Linearantriebe in Frage. Es ist bevorzugt, dass die Antriebselemente als Zahnriemen ausgebildet sind, die über Umlenkrollen an beispielsweise den Führungen geleitet werden und die Klemmbackenschlitten (über eine Kopplung mit der Antriebseinheit) antreiben; bei einer solchen Ausführungsform sind die Klemmbackenschlitten mit entsprechenden Mitteln zur Kopplung an den Zahnriemen ausgebildet.

Um eine separate Steuerungsmöglichkeit sämtlicher Klemmbackenschlitten zu erreichen ist es bei einer alternativen erfindungsgemäßen Lösung vorgesehen, dass die Klemmbackenführungsanordnung zumindest vier mit einer Antriebseinheit gekoppelte Antriebselemente aufweist, wobei zwei erste Antriebselemente mit den ersten Klemmbackenschlitten und zwei zweite Antriebselemente mit den zweiten Klemmbackenschlitten verbunden sind, wobei die ersten und die zweiten Antriebselemente in der ersten horizontalen Richtung (x) beabstandet voneinander angeordnet sind. Bei dieser Ausführungsform ist lediglich eine (zentrale) Antriebseinheit vorgesehen, welche über die Antriebselemente mit den Klemmbackenschlitten gekoppelt ist und welche die Klemmbackenschlitten über die Antriebselemente an den Führungen bewegt. Die Antriebseinheit selbst kann lediglich einen Antrieb aufweisen, der dann mit einem entsprechenden Getriebe mit den Antriebselementen gekoppelt ist, um diese einzeln und/oder paarweise zu bewegen.

Die Antriebselemente und die zugehörige Antriebseinheit können beliebig ausgebildet sein, solange eine Linearbewegung der Klemmbackenschlitten in der zweiten horizontalen Richtung (y) an bzw. auf den Führungen gewährleistet ist. Zum Antreiben bzw. Bewegen der Klemmbackenschlitten kommen also beliebige Linearantriebe in Frage. Bei einer konstruktiv besonders günstigen und baulich einfachen Ausführungsform des Bediengerätes sind die Antriebselemente als Zahnstangen ausgebildet und entsprechend mit der Antriebseinheit gekoppelt. Ein weiterer Vorteil der Zahnstangen ist, dass mit diesen hohe Kräfte auf die Klemmbackenschlitten übertragen werden können.

Zum Auslagern von Stückgütern bzw. Arzneimittelpackungen von Lagerflächen wird üblicherweise so vorgegangen, dass die Klemmbacken parallel gestellt und dann in die Lagerfläche hineinbewegt werden, so dass sich die auszulagernden Stückgüter nach dem Hineinbewegen der Klemmbacken zwischen diesen befinden. Zum Greifen der Stückgüter werden die Klemmbacken dann derart verschwenkt, dass sich die in die Lagerflächen eingefahrenen Enden der Klemmbacken aufeinander zu bewegen. Beim Auslagern können die Enden der Klemmbacken an den Seiten der Stückgüter anliegen oder die Klemmbacken sind soweit zugefahren, dass der Abstand der Enden der Klemmbacken geringer als die Breite des hinteren auszulagernden Stückgutes ist.

Bedingt durch die Art und Weise der Auslagerung von Stückgütern ist es nicht erforderlich, dass die Klemmbacken getrennt voneinander bewegt werden, ein synchrones, spiegelbildlich identisches Bewegen der Klemmbacken ist ausreichend. Bei einer bevorzugten Ausführungsform ist es daher vorgesehen, dass die Antriebseinheit zumindest zwei Antriebe mit jeweils einem Antriebszahnrad aufweist und die als Zahnspangen ausgebildeten ersten und zweiten Antriebselemente jeweils gegenüberliegend angeordnet sind, wobei jeweils ein Antriebszahnrad zentral zwischen den ersten und zweiten Antriebselementen angeordnet ist, so dass die einer Führung zugeordneten Klemmbackenschlitten synchron angetrieben sind.

Wie oben dargelegt, ist es erforderlich, dass die Klemmbacken zum Auslagern von Stückgütern bzw. Arzneimittelpackungen in die Lagerfläche hineinbewegt werden. Da die Klemmbacken mit der Klemmbackenführungsanordnung gekoppelt sind, ist es erforderlich, dass diese in Einlagerungs- bzw. Auslagerungsrichtung (entspricht der ersten horizontalen Richtung (x)) bewegbar ist, wozu die Klemmbackenführungsanordnung mit einer entsprechenden Antriebseinheit gekoppelt ist.

Um ein Bediengerät mit einem möglichst großen freien Ablagetisch bereitzustellen (also mit einer möglichst kompakten Klemmbackenführungsanordnung), ist es bei einer bevorzugten Ausführungsform vorgesehen, dass ein Bauteil der Rahmenstruktur der Klemmbackenführungsanordnung den Ablagetisch umgreift und mit einer unterhalb des Ablagetisches angeordneten Antriebseinheit zur Bewegung der Klemmbackenführungsanordnung gekoppelt ist. Bei einer derartigen Ausführung der Klemmbackenführungsanordnung ist es möglich, den Antrieb zur Bewegung der Klemmbackenführungsanordnung in Ein- bzw. Auslagerungsrichtung unter dem Ablagetisch anzuordnen, so dass die Klemmbackenführungsanordnung in Bezug auf die erste horizontale Richtung (x) sehr kompakt ausgebildet ist.

Bei einer konstruktiv einfachen bevorzugten Ausführungsform ist die Antriebseinheit zur Bewegung der Klemmbackenführungsanordnung als Linearantrieb mit sich bewegenden Teilen und feststehenden Teilen ausgebildet, wobei die sich bewegenden Teile mit dem Bauteil der Rahmenstruktur gekoppelt sind, das den Ablagetisch umgreift, und die feststehenden Teile unterhalb des Ablagetisches ausgebildet sind.

Zum Bewegen von auf dem Ablagetisch angeordneten Stückgütern bzw. Arzneimittelpackungen von diesem auf eine Lagerfläche umfasst das Bediengerät üblicherweise eine Schiebeeinrichtung, die beispielsweise als Teleskoparm ausgebildet sein kann, wobei dieser mit der Klemmbackenführungsanordnung gekoppelt sein kann bzw. als ein Bauteil der Klemmbackenführungsanordnung ausgebildet sein kann.

Um die Klemmbackenführungsanordnung baulich möglichst einfach zu halten ist es bei einer bevorzugten Ausführungsform vorgesehen, dass der Ablagetisch eine sich in der ersten horizontalen Richtung erstreckende Öffnung aufweist, in welcher eine Schiebeeinrichtung in der ersten horizontalen Richtung bewegbar ist, wobei die Schiebeeinrichtung mit einem Antrieb gekoppelt ist. Die Mechanik zum Bewegen der Schiebeeinrichtung ist also primär unter dem Ablagetisch angeordnet, so dass die Anzahl der Bauelemente der Klemmbackenführungsanordnung vermindert ist.

Um gegebenenfalls ein Abrutschen von an Stückgütern anliegenden Klemmbacken beim Auslagern zu vermeiden, ist es bei einer bevorzugten Ausführungsform vorgesehen, dass zumindest ein Abschnitt der Klemmflächen der Klemmbacken ein rutschhemmendes Material aufweist, also entweder aus einem solchen Material besteht oder mit einem entsprechenden Material zumindest abschnittsweise beschichtet ist.

Im Nachfolgenden wird eine Ausführungsform des erfindungsgemäßen Bediengerätes unter Bezugnahme auf die Zeichnung beschrieben, wobei
Figuren 1a, 1b Schrägansichten einer bevorzugten Ausführungsform des erfindungsgemäßen Bediengeräts zeigen,
Figuren 2a, 2b Schrägansichten der Klemmbackenführungsanordnung der bevorzugten Ausführungsform zeigen,
Figur 3 eine detaillierte Schrägansicht der Klemmbackenführungsanordnung der bevorzugten Ausführungsform zeigt, wobei einige Bauteile fortgelassen sind,
Figuren 4a, 4b eine Draufsicht und eine Untersicht der Klemmbackenführungsanordnung gemäß Figur 3 zeigen,
Figur 5 eine detaillierte Schrägansicht der Klemmbackenführungsanordnung bei zusammengefahrenen parallelen Klemmbacken zeigt, wobei einige Bauteile fortgelassen sind,
Figuren 6a, 6b eine Draufsicht sowie eine Untersicht der Klemmbackenführungsanordnung gemäß Figur 5 zeigen.

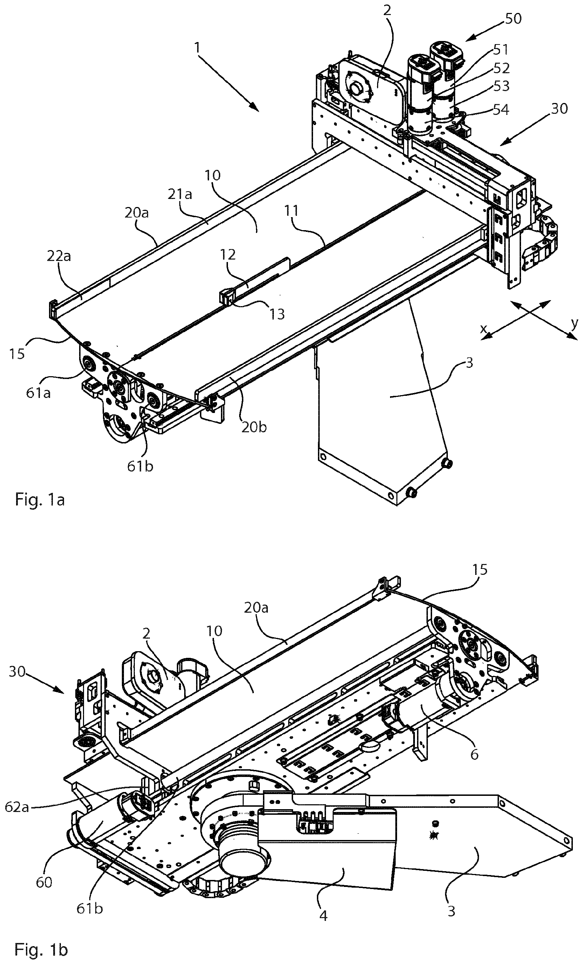

Figuren 1a, 1b zeigen zwei Schrägansichten einer bevorzugten Ausführungsform des erfindungsgemäßen Bediengeräts, wobei Figur 1a eine Schrägansicht von oben und Figur 1b eine Schrägansicht von unten wiedergeben. Das erfindungsgemäße Bediengerät 1 umfasst einen Ablagetisch 10, über welchem zwei Klemmbacken 20a, 20b mit gegenüberliegenden Klemmflächen 21a, 21b angeordnet sind. Bei ihren freien Enden weisen die Klemmbacken 20a, 20b einen Abschnitt 22a, 22b auf, der mit einem rutschhemmenden Material beschichtet ist.

Bei den freien Enden der Klemmbacken weist der Ablagetisch 10 eine Ein- und Auslagerungsseite 15 auf, über welche Arzneimittelpackungen von dem Ablagetisch auf Lagerflächen geschoben werden bzw. von Lagerflächen auf den Ablagetisch gezogen werden. Die Ein- und Auslagerungsrichtung entspricht der in Figur 1a angedeuteten ersten horizontalen Richtung x.

Der Ablagetisch umfasst mittig eine langgestreckte Öffnung 11, die sich in Ein- und Auslagerungsrichtung, d. h. in der ersten horizontalen Richtung x erstreckt. In der Öffnung 11 ist ein Schiebeelement 12 mit einem verbreiterten Schiebekopf 13 angeordnet. Das Schiebeelement 12 kann in der langgestreckten Öffnung 11 in Ein- und Auslagerungsrichtung bzw. der ersten horizontalen Richtung x bewegt werden.

Gegenüber der Ein- und Auslagerungsseite 15 ist eine Klemmbackenführungsanordnung 30 angeordnet, mit welcher die Klemmbacken 20a, 20b verbunden sind und welche die Mechanik zum Verschwenken der Klemmbacken umfasst. Im oberen Abschnitt umfasst die Klemmbackenführungsanordnung 30 eine Antriebseinheit 50 mit zwei Antrieben 51, 52 sowie zugeordneten Getrieben 53, 54. Über diese beiden Antriebe werden bei der gezeigten Ausführungsform die Klemmbacken geschwenkt, wie dies unter Bezugnahme auf nachfolgende Figuren detaillierter beschrieben wird. Die Klemmbackenführungsanordnung umfasst ferner eine optische Erfassungseinrichtung 2, mit welcher bei dem Ein- und Auslagerungsvorgang verschiedene Aspekte überwacht werden können.

Die Klemmbackenführungseinrichtung 30 sowie sämtliche ihrer elektronischen Bauteile sind mit einer Steuerung 4 verbunden, die bei der gezeigten Ausführungsform unterhalb eines Befestigungsarmes 3 angeordnet ist. Der Befestigungsarm 3 selbst ist an dem Ablagetisch bzw. an einem Unterbau des Ablagetisches über ein Drehgelenk befestigt.

Zur Ein- und Auslagerung von Arzneimittelpackungen muss die Klemmbackenführungsanordnung 30 in der ersten horizontalen Richtung x bzw. der Ein- und Auslagerungsrichtung bewegt werden. Dazu ist bei der gezeigten Ausführungsform unterhalb des Ablagetisches ein Antrieb 60 angeordnet, mittels welchem die Klemmbackenführungsanordnung 30 bewegt wird, wie dies unter Bezugnahme auf nachfolgende Figuren detaillierter beschrieben wird. Unterhalb des Ablagetisches ist ferner ein weiterer Antrieb 6 angeordnet, mit welchem das Schiebeelement 12 in der ersten horizontalen Richtung x in der länglichen Öffnung 11 bewegbar ist.

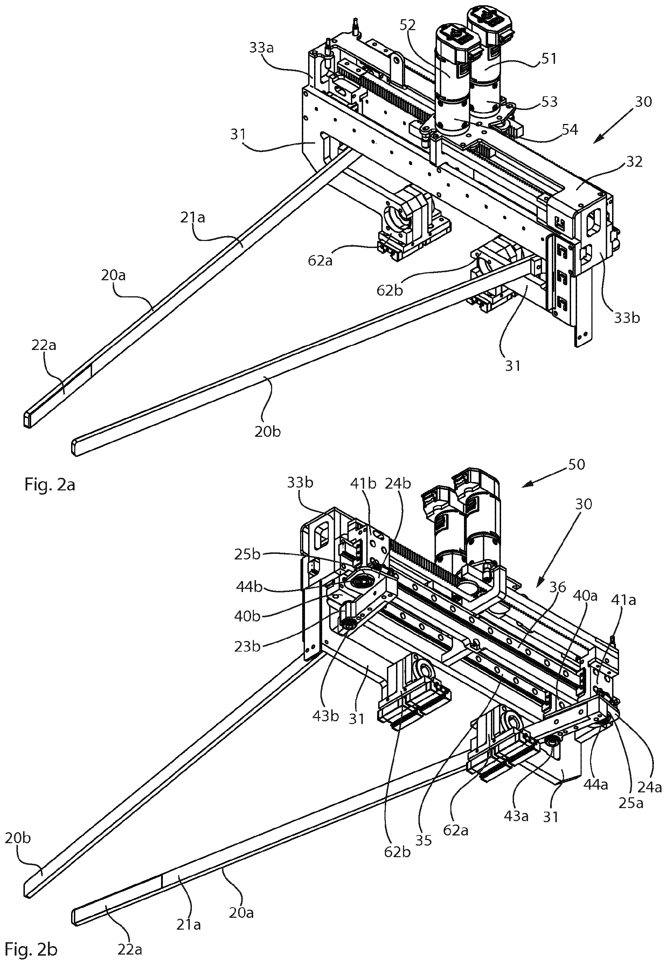

Figuren 2a und 2b zeigen Schrägansichten der Klemmbackenführungsanordnung 30 samt Klemmbacken 20a, 20b. Die Klemmbackenführungsanordnung 30 umfasst eine Rahmenstruktur 31, 32, 33a, 33b, wobei das vordere Bauteil 31 die Klemmbacken (und den nicht dargestellten Ablagetisch) umgreift. Bei den unteren Enden des Bauteiles 31 sind bewegliche Teile 62a, 62b (die "Läufer") eines Linearantriebes befestigt, mit welchen die Klemmbackenführungsanordnung 30 in der ersten horizontalen Richtung bewegt werden kann. Die Bauteile werden als "beweglich" bezeichnet, da sie sich zusammen mit der Klemmbackenführungsanordnung entlang entsprechender feststehender Teile (die zum Bewegen der beweglichen Teile gedreht werden) in der ersten horizontalen Richtung bewegen. Die feststehenden Teile 61a, 61b (siehe Figur 1b) selbst können sich zum Bewegen der beweglichen Teile Bewegen, beispielweise indem sie sich Drehen, wobei bei dieser Drehbewegung die beweglichen Teile entlang der Längsachse der feststehenden Teile bewegt werden. Die feststehenden Teile sind also nur in Bezug auf ihre Position innerhalb des Bediengeräts selber feststehend.

Bei einer alternativen Ausführungsform ist es beispielsweise denkbar, dass die feststehenden Teile als Zahnriemen ausgebildet sind, die zwischen den Längsenden des Bediengeräts ausgebildet sind und mit entsprechenden Umlenkrollen zum Bewegen der beweglichen Teile zusammenwirken.

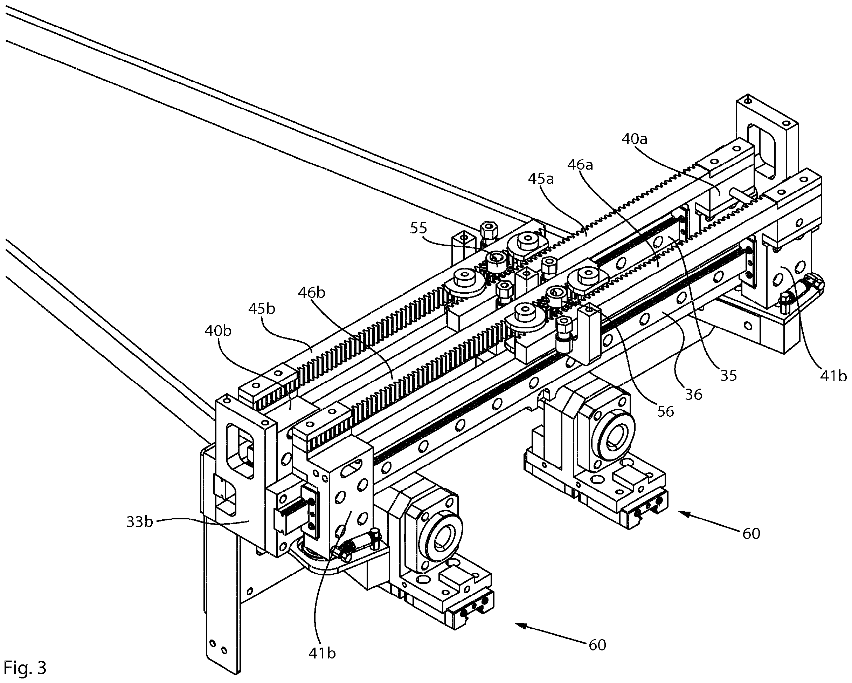

Wie es den Figuren 2b und 3 zu entnehmen ist, erstrecken sich zwischen den seitlichen Rahmenstrukturbauteilen 33a, 33b in einer zweiten horizontalen Richtung y parallel zueinander und in der ersten horizontalen Richtung x beabstandet voneinander zwei Führungen 35, 36, eine erste Führung 35 und eine zweite Führung 36, wobei die erste Führung den freien Enden der Klemmbacken zugewandt ist.

An jeder der Führungen 35, 36 sind zwei Klemmbackenschlitten 40a, 40b; 41a, 41b angeordnet; zwei erste Klemmbackenschlitten 40a, 40b an der ersten Führung 35, zwei zweite Klemmbackenschlitten 41a, 41b an der zweiten Führung 36. Bei der dargestellten Ausführungsform des erfindungsgemäßen Bediengerätes umgreift ein Abschnitt der Klemmbackenschlitten einen Vorsprung der Führungen 35, 36, so dass die Klemmbackenschlitten auf diesem Vorsprung teilweise aufliegen.

Bei alternativen Ausführungsformen können die Führungen und die Schlitten abweichend ausgebildet sein. So ist es beispielsweise auch denkbar, dass die Führungen als einfache Röhren ausgebildet sind, über welche diese umfassende Klemmbackenschlitten bewegt werden. Die genaue Ausführung der Führungen sowie der Klemmbackenschlitten ist für die vorliegende Erfindung unerheblich; es ist lediglich sicherzustellen, dass die Klemmbacken parallel zueinander und in der zweiten horizontalen Richtung y, welche quer bzw. orthogonal zu der ersten horizontalen Richtung x verläuft, bewegbar sind.

Wie dies insbesondere Figur 3 zu entnehmen ist, sind die Klemmbackenschlitten 40a, 40b; 41a, 41b mit Antriebselementen 45a, 45b; 46a, 46b verbunden, die bei der gezeigten Ausführungsform als Zahnstangen ausgebildet sind. Die der ersten Führung 35 bzw. den entsprechenden ersten Klemmbackenschlitten 40a, 40b zugeordneten Antriebselemente 45a, 45b sowie die entsprechenden der zweiten Führung 36 zugeordneten Antriebselemente 46a, 46b sind bezogen auf die Zahnelemente der Zahnstangen derart ausgerichtet, dass sich die Zahnelemente gegenüberliegen und bei ihren freien Enden einen Überlappungsbereich bilden. Mittig in dem Überlappungsbereich der Antriebselemente bzw. Zahnstangen ist jeweils ein Antriebszahnrad 55, 56 angeordnet, welches über ein (in Figur 3 nicht dargestelltes) Getriebe 53, 54 mit einem Antrieb 51, 52 gekoppelt ist. Der Abstand zwischen den Klemmbackenschlitten 40a, 40b; 41a, 41b einer Führung und dem entsprechenden Antriebszahnrad ist identisch, ein Antriebszahnrad ist also genau mittig zwischen zwei Klemmbackenschlitten angeordnet, so dass eine Bewegung des Antriebszahnrades synchrone Bewegungen der Klemmbackenschlitten bewirkt. *Bei einer Drehung des Antriebszahnrades werden die Klemmbackenschlitten also synchron aufeinander zu oder voneinander weg bewegt, wobei entsprechendes für die den beiden Führungen 35, 36 zugeordneten Klemmbackenschlitten gilt. Die Klemmbackenschlitten der ersten Führung können also simultan oder getrennt hinsichtlich der Klemmbackenschlitten der zweiten Führung bewegt werden, so dass eine große Flexibilität hinsichtlich der Bewegung der Klemmbackenschlitten besteht. Die Klemmbackenschlitten der ersten bzw. zweiten Führung können synchron bewegt werden, oder es können nur die der ersten oder der zweiten Führung zugeordneten Klemmbackenschlitten bewegt werden. Auf diese Weise ist es möglich, die an den Klemmbackenschlitten befestigten Klemmbacken parallel oder bereits geschwenkt simultan ohne Winkelverstellung zu verfahren (indem die Klemmbackenschlitten beider Führungen simultan bewegt werden), oder, wenn lediglich die Klemmbackenschlitten einer Führung bewegt werden, die Klemmbacken zu schwenken.*

Bei der gezeigten Ausführungsform ist jedem Klemmbackenschlitten ein Antriebselement zugeordnet. Bei einer alternativen Ausführungsform ist es denkbar, dass lediglich zwei Antriebselemente vorgesehen sind, wobei dieses dann jeweils einer Führung zugeordnet sind und beispielsweise als Zahnriemen ausgebildet sind, mit denen die Klemmbackenschlitten angetrieben werden. Bei einer entsprechenden Ausführungsform wären noch Umlenkrollen für die Zahnriemen vorzusehen. Diese könnten an die Führungen oder die Rahmenstruktur gekoppelt sein. Ferner wäre eine Kopplung zwischen der Antriebseinheit und den Antriebselementen / Zahnriemen zu gewährleisten, was mit dem Fachmann bekannten Mitteln realisiert werden kann.

Wie bereits ausgeführt, sind die Klemmbacken 20a, 20b mit der Klemmbackenführungsanordnung 30 gekoppelt. Diese Kopplung ist bei Figur 2b zu erkennen. Bei der gezeigten Ausführungsform sind die Klemmbacken 20a, 20b jeweils über ein Drehgelenk 23a, 43a; 23b, 43b mit den Klemmbackenschlitten 40a, 40b der ersten Führung 35 und über eine Langlochführung 24a, 25a, 44a; 24b, 25b, 44b mit den Klemmbackenschlitten 41a, 41b der zweiten Führung 36 verbunden. Bei alternativen Ausführungsformen kann das Drehgelenk auch bei den der zweiten Führung zugeordneten Klemmbackenschlitten angeordnet sein, in diesem Fall ist es dann bei der dargestellten Kombination erforderlich, dass die Langlochführungen bei den der ersten Führung 35 zugeordneten Klemmbackenschlitten angeordnet sind.

Eine Verwendung der Kombination Drehgelenk/Langlochführung ist jedoch nicht zwingend. Zwar müssen die Klemmbacken bei zumindest einer Führung mittels eines Dreh- bzw. Schwenkgelenkes an den entsprechenden Klemmbackenschlitten gehalten sein, die Verwendung einer Langlochführung ist jedoch nicht zwingend erforderlich. So ist es beispielsweise denkbar, dass die Klemmbacken bei einer alternativen Ausführungsform mit den Klemmbackenschlitten gegen eine Rückstellkraft bewegt werden, und bei einem Rückfahren der Klemmbackenschlitten die Rückstellkraft die Klemmbacken zurückbewegt.

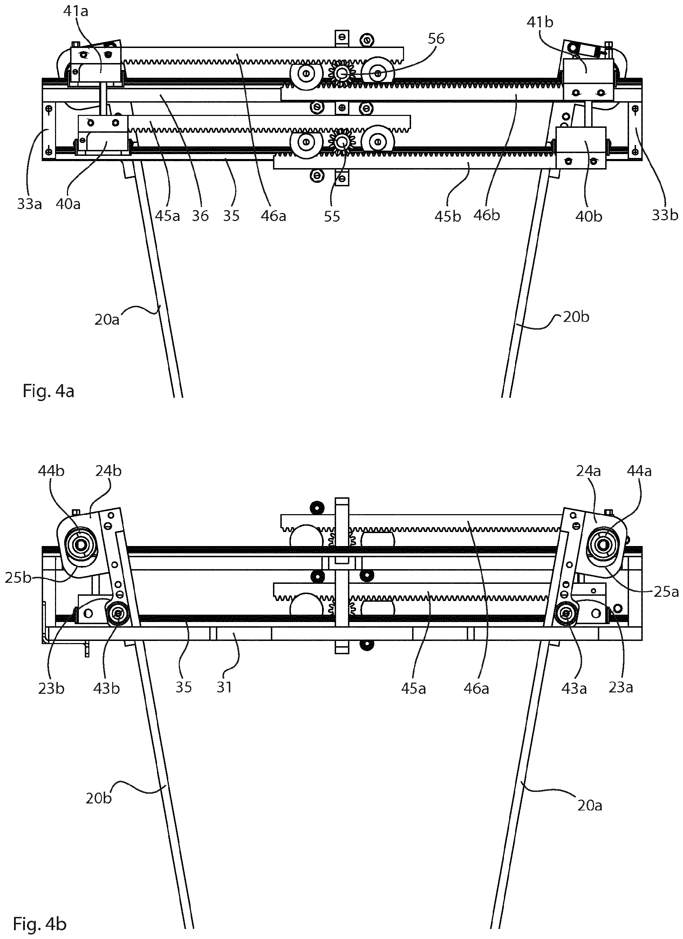

Figuren 4a, 4b zeigen eine Draufsicht bzw. Untersicht der Klemmbackenführungsanordnung bei geschwenkten Klemmbacken, wobei Teile der Rahmenstruktur sowie der Antriebeinheit fortgelassen sind. Bei Figur 4a ist gut zu erkennen, dass die Antriebszahnräder 55, 56 genau mittig zwischen entsprechenden Klemmbackenschlitten 40a, 40b; 41a, 41b angeordnet sind, so dass eine Drehbewegung der Antriebszahnräder 55, 56 eine synchrone Bewegung der zugeordneten Klemmbackenschlitten bewirkt.

Figur 4b zeigt detaillierter die Drehgelenke 23a, 43a; 23b, 43b sowie die Langlochführungen 24a, 25a, 44a; 24b, 25b, 44b. Zapfen bzw. Ansätze 43a, 43b, 44a, 44b der Drehgelenke, bzw. der Langlochführungen werden von den entsprechenden Klemmbackenschlitten bereitgestellt, während die entsprechenden Aufnahmen von den Klemmbacken bzw. an diesen angeordneten Bauteilen bereitgestellt sind.

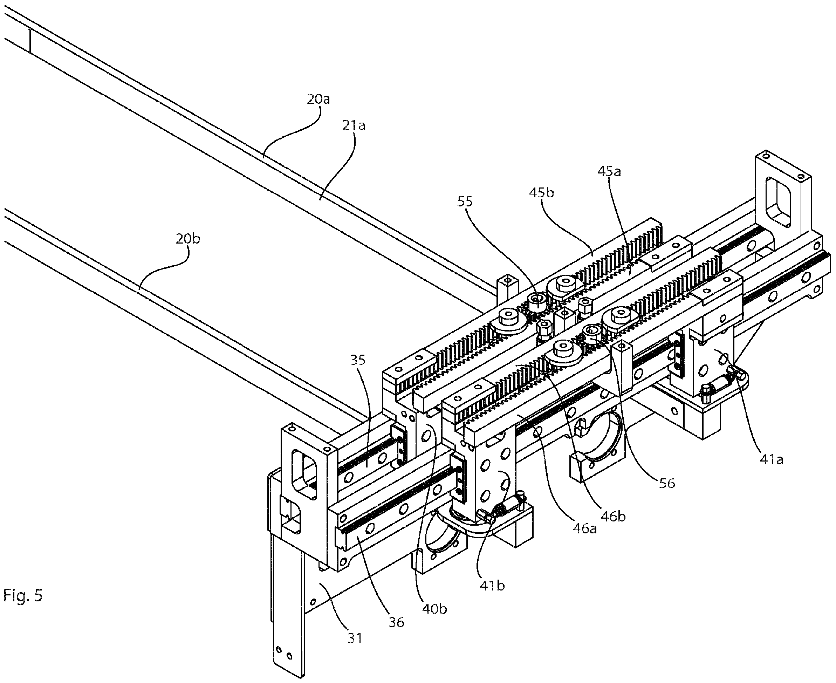

Figur 5 zeigt eine Detailansicht der Klemmbackenführungsanordnung 30, wobei Teile der Antriebseinheit 50 sowie der Rahmenstruktur zu besseren Ansicht der verbleibenden Bauteile fortgelassen sind. Bei Figur 5 sind die Klemmbacken 20a, 20b zusammengefahren und parallel zueinander ausgerichtet. Bei einem Vergleich der Figuren 3, 5 ist zu erkennen, wie durch eine Verschiebung der Klemmbackenschlitten an den Führungen die Stellung der Klemmbacken beeinflusst ist.

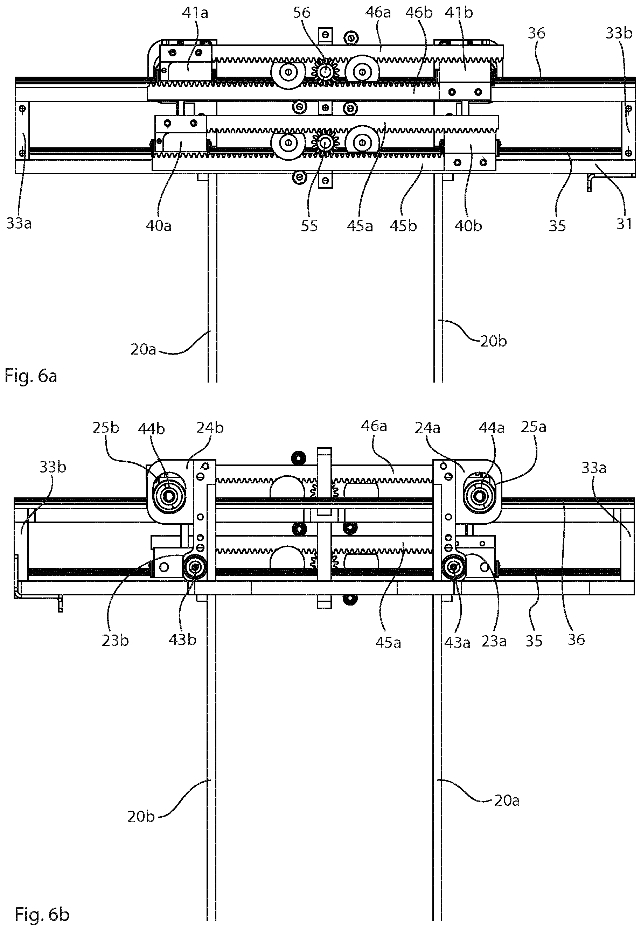

Die Figuren 6a, 6b zeigen eine Draufsicht sowie eine Untersicht gemäß Figur 5, d. h. einer Klemmbackenführungsanordnung mit zusammengefahrenen parallelen Klemmbacken. Bei Figur 6b ist zu erkennen, dass die Ansätze bzw. Zapfen 44a, 44b der Klemmbackenschlitten der Führung 36 in den Langlöchern 25a, 25b ganz "unten" angeordnet sind, da die Klemmbacken parallel gestellt sind und damit der Abschnitt der Klemmbacken, der zwischen der ersten und der zweiten Führung 35, 36 angeordnet ist, am geringsten ist. Bei einem Verschwenken der Klemmbacken, sei es (bezogen auf die Klemmbackenenden) nach innen oder außen, vergrößert sich der Abschnitt der Klemmbacken (also dessen Länge), der zwischen den Führungen angeordnet ist, so dass die Ansätze bzw. Zapfen 44a, 44b in den Langlöchern 25a, 25b nach "oben" wandern würden. Bei der gezeigten Ausführungsform ist es auch nicht erforderlich, dass das "Langloch" als solches geschlossen ist, es kann auch ein offenes Langloch, also eine Art Gabel, zur Führung der Zapfen bzw. Ansätze verwendet werden.

## Patentansprüche

1. Bediengerät (1) für eine Kommissioniervorrichtung mit horizontalen Lagerflächen zur Lagerung von Stückgütern, aufweisend:
einen sich in einer ersten horizontalen Richtung (x) erstreckenden Ablagetisch (10) mit einer Ein- und Auslagerungsseite (15),
zwei über dem Ablagetisch (10) angeordnete langgestreckte Klemmbacken (20a, 20b) mit einander zugewandten Klemmflächen (21a, 21b),
eine Klemmbackenführungsanordnung (30) mit
einer Rahmenstruktur (31, 32, 33a, 33b),
zumindest einer ersten und einer zweiten Führung (35, 36), die sich parallel und in der ersten horizontalen Richtung (x) beabstandet voneinander in einer zweiten horizontalen Richtung (y) quer zur ersten horizontalen Richtung erstrecken, und
zumindest vier mit den Führungen (35, 36) gekoppelten und in der zweiten horizontalen Richtung (y) angetriebenen Klemmbackenschlitten (40a, 40b, 41a, 41b), wobei jeweils zwei erste Klemmbackenschlitten (40a, 40b) der ersten Führung (35) und zwei zweite Klemmbackenschlitten (41a, 41b) der zweiten Führung zugeordnet sind und wobei jeweils zumindest zwei in der ersten horizontalen Richtung (x) beabstandete Klemmbackenschlitten (40a, 41a; 40b, 41b) mit einer Klemmbacke (20a, 20b) gekoppelt sind, und
eine mit der Klemmbackenführungsanordnung gekoppelte Antriebseinheit (60, 61a, 61b, 62a, 62b), mit der die Klemmbackenführungsanordnung (30) in der ersten horizontalen Richtung (x) angetrieben ist,
**dadurch gekennzeichnet, dass** die Klemmbackenführungsanordnung (30) zumindest zwei mit einer Antriebseinheit (50) gekoppelte Antriebselemente aufweist, wobei ein erstes Antriebselement mit den ersten Klemmbackenschlitten (40a, 40b) und ein zweites Antriebselement mit den zweiten Klemmbackenschlitten (41a, 41b) verbunden ist, wobei das erste und das zweite Antriebselement in der ersten horizontalen Richtung (x) beabstandet voneinander angeordnet sind.

2. Bediengerät (1) für eine Kommissioniervorrichtung mit horizontalen Lagerflächen zur Lagerung von Stückgütern, aufweisend:
einen sich in einer ersten horizontalen Richtung (x) erstreckenden Ablagetisch (10) mit einer Ein- und Auslagerungsseite (15),
zwei über dem Ablagetisch (10) angeordnete langgestreckte Klemmbacken (20a, 20b) mit einander zugewandten Klemmflächen (21a, 21b),
eine Klemmbackenführungsanordnung (30) mit
einer Rahmenstruktur (31, 32, 33a, 33b),
zumindest einer ersten und einer zweiten Führung (35, 36), die sich parallel und in der ersten horizontalen Richtung (x) beabstandet voneinander in einer zweiten horizontalen Richtung (y) quer zur ersten horizontalen Richtung erstrecken, und
zumindest vier mit den Führungen (35, 36) gekoppelten und in der zweiten horizontalen Richtung (y) angetriebenen Klemmbackenschlitten (40a, 40b, 41a, 41b), wobei jeweils zwei erste Klemmbackenschlitten (40a, 40b) der ersten Führung (35) und zwei zweite Klemmbackenschlitten (41a, 41b) der zweiten Führung zugeordnet sind und wobei jeweils zumindest zwei in der ersten horizontalen Richtung (x) beabstandete Klemmbackenschlitten (40a, 41a; 40b, 41b) mit
einer Klemmbacke (20a, 20b) gekoppelt sind, und
eine mit der Klemmbackenführungsanordnung gekoppelte Antriebseinheit (60, 61a, 61b, 62a, 62b), mit der die Klemmbackenführungsanordnung (30) in der ersten horizontalen Richtung (x) angetrieben ist,
**dadurch gekennzeichnet, dass** die Klemmbackenführungsanordnung (30) zumindest vier mit einer Antriebseinheit (50) gekoppelte Antriebselemente (45a, 45b, 46a, 46b) aufweist, wobei zwei erste Antriebselemente (45a, 45b) mit den ersten Klemmbackenschlitten (40a, 40b) und zwei zweite Antriebselemente (46a, 46b) mit den zweiten Klemmbackenschlitten (41a, 41b) verbunden sind, wobei die ersten und die zweiten Antriebselemente (45a, 45b; 46a, 46b) in der ersten horizontalen Richtung (x) beabstandet voneinander angeordnet sind.

3. Bediengerät (1) für eine Kommissioniervorrichtung nach Anspruch 2, **dadurch gekennzeichnet, dass** die Antriebselemente (45a, 45b, 46a, 46b) als Zahnstangen ausgebildet sind.

4. Bediengerät (1) für eine Kommissioniervorrichtung nach Anspruch 3, **dadurch gekennzeichnet, dass** die Antriebseinheit (50) zumindest zwei Antriebe (51, 52) mit jeweils einem Antriebszahnrad (55, 56) aufweist und die als Zahnstangen ausgebildeten ersten und zweiten Antriebselemente (45a, 45b; 46a, 46b) jeweils gegenüberliegend angeordnet sind, wobei jeweils ein Antriebszahnrand (55, 56) zentral zwischen den ersten und zweiten Antriebselementen (45a, 45b; 46a, 46b) angeordnet ist, so dass die einer Führung (35, 36) zugeordneten Klemmbackenschlitten (40a, 40b; 41a, 41b) synchron angetrieben sind.

5. Bediengerät (1) für eine Kommissioniervorrichtung nach einem der Ansprüche 1 - 4, **dadurch gekennzeichnet, dass** ein Bauteil (31) der Rahmenstruktur (31, 32, 33a, 33b) den Ablagetisch (10) umgreift und mit der unterhalb des Ablagetisches (10) angeordneten Antriebseinheit (60, 61a, 61b, 62a, 62b) zur Bewegung der Klemmbackenführungsanordnung (30) gekoppelt ist.

6. Bediengerät (1) für eine Kommissioniervorrichtung nach einem der Ansprüche 1 - 5, **dadurch gekennzeichnet, dass** die Antriebseinheit (60, 61a, 61b, 62a, 62b) zur Bewegung der Klemmbackenführungsanordnung (30) als Linearantrieb mit sich bewegenden Teilen (61a, 61b) und feststehenden Teilen (62a, 62b) ausgebildet ist.

7. Bediengerät (1) für eine Kommissioniervorrichtung nach einem der Ansprüche 1 - 6, **dadurch gekennzeichnet, dass** der Ablagetisch (10) eine sich in der ersten horizontalen Richtung (x) erstreckende Öffnung (11) aufweist, in welcher eine Schiebeeinrichtung (12) in der ersten horizontalen Richtung (x) bewegbar ist, wobei die Schiebeeinrichtung (12) mit einem Antrieb (6) gekoppelt ist.

8. Bediengerät (1) für eine Kommissioniervorrichtung nach einem der Ansprüche 1 - 7, **dadurch gekennzeichnet, dass** zumindest ein Abschnitt (22a, 22b) der Klemmflächen (21a, 21b) der Klemmbacken (20a, 20b) ein rutschhemmendes Material aufweist.

## Claims

1. Operator device (1) for a picking system with horizontal storage areas for storing general cargo, comprising:
a storage table (10) extending in a first horizontal direction (x) with a storage and removal side (15),
two elongated clamping jaws (20a, 20b) arranged above the storage table (10) with clamping surfaces facing each other (21a, 21b),
a clamping jaw guide assembly (30) comprising a frame structure (31, 32, 33a, 33b),
at least one first and at least one second guide (35, 36) which extend parallel and in the first horizontal direction (x) at a distance from each other in a second horizontal direction (y) transversely to the first horizontal direction, and
at least four clamping jaw slides (40a, 40b, 41a, 41b) coupled to the guides (35, 36) and driven in the second horizontal direction (y), wherein two first clamping jaw slides (40a, 40b) are each assigned to the first guide (35), and two second clamping jaw slides (41a, 41b) are assigned to the second guide, and wherein at least two clamping jaw slides (40a, 41a; 40b, 41b) spaced away in the first horizontal direction (x) are coupled to a clamping jaw (20a, 20b), as well as a drive unit (60, 61a, 61b, 62a, 62b) coupled to a clamping jaw guide assembly, via which the clamping jaw guide assembly (30) is driven in the first horizontal direction (x),
**characterized in that** the clamping jaw guide assembly (30) comprises at least two drive elements coupled to a drive unit (50), wherein a first drive element is connected to the first clamping jaw slides (40a, 40b) and a second drive element is connected to the second clamping jaw slides (41a, 41b), wherein the first and the second drive element in the first horizontal direction (x) are arranged at a distance from one another.

2. Operator device (1) for a picking system with horizontal storage areas for storing general cargo, comprising:
a storage table (10) extending in a first horizontal direction (x) with a storage and removal side (15),
two elongated clamping jaws (20a, 20b) arranged above the storage table (10) with clamping surfaces facing each other (21a, 21b),
a clamping jaw guide assembly (30)
with a frame structure (31, 32, 33a, 33b),
at least one first and a second guide (35, 36), which extend parallel and in the first horizontal direction (x) at a distance from each other in a second horizontal direction (y) transversely to the first horizontal direction, and
at least four clamping jaw slides (40a, 40b, 41a, 41b) coupled to the guides (35, 36) and driven in the second horizontal direction (y), wherein two first clamping jaw slides (40a, 40b) of the first guide (35) and two second clamping jaw slides (41a, 41b) are assigned to the second guide and wherein at least two clamping jaw slides (40a, 41a; 40b, 41b) spaced away in the first horizontal direction (x) are coupled to a clamping jaw (20a, 20b), as well as a drive unit coupled to the clamping jaw guide assembly (60, 61a, 61b, 62a, 62b), via which the clamping jaw guide assembly (30) is driven in the first horizontal direction (x),
**characterized in that** the clamping jaw guide assembly (30) comprise at least four drive elements (45a, 45b, 46a, 46b) coupled to a drive unit (50), wherein two first drive elements (45a, 45b) are connected to the first clamping jaw slides (40a, 40b) and two second drive elements (46a, 46b) are connected to the second clamping jaw slides (41a, 41b), wherein the first and the second drive elements (45a, 45b; 46a, 46b) in the first horizontal direction (x) are arranged at a distance from one another.

3. Operator device (1) for a picking device according to Claim 2, **characterized in that** the drive elements (45a, 45b, 46a, 46b) are formed as racks.

4. Operator device (1) for a picking device according to Claim 3, **characterized in that** the drive unit (50) comprises at least two drives (51, 52) each with a drive gearwheel (55, 56) and the first and second drive elements designed as racks (45a, 45b; 46a, 46b) are each arranged opposite, wherein each drive gearwheel (55, 56) is centrally arranged between the first and second drive elements (45a, 45b; 46a, 46b) so that the clamping jaw slides (40a, 40b; 41a, 41b) assigned to a guide (35, 36) are synchronously driven.

5. Operator device (1) for a picking device according to any one of Claims 1 - 4, **characterized in that** a component (31) of the frame structure (31, 32, 33a, 33b) grips the storage table (10) and is coupled to the drive unit (60, 61a, 61b, 62a, 62b) arranged below the storage table (10) for the movement of the clamping jaw guide assembly (30).

6. Operator device (1) for a picking device according to any one of the Claims 1 - 5, **characterized in that** the drive unit (60, 61a, 61b, 62a, 62b) for the movement of the clamping jaw guide assembly (30) is designed as a linear drive with moving parts (61a, 61b) and fixed parts (62a, 62b).

7. Operator device (1) for a picking device according to any one of the Claims 1 - 6, **characterized in that** the storage table (10) comprises an opening (11) extending in the first horizontal direction (x), in which a sliding device (12) in the first horizontal direction (x) is movable, wherein the sliding device (12) is coupled to a drive (6).

8. Operator device (1) for a picking device according to any one of the Claims 1 - 7, **characterized in that** at least one section (22a, 22b) of the clamping surfaces (21a, 21b) of the clamping jaws (20a, 20b) comprises a non-slip material.

## Revendications

1. Unité de commande (1) pour dispositif de préparation de commandes comportant des surfaces de stockage horizontales pour le stockage de marchandises unitaires, présentant :
une table de dépôt (10) s'étendant dans un premier sens horizontal (x) et dotée d'un côté de mise en stock et de sortie de stock (15),
deux mâchoires de serrage étirées en longueur (20a, 20b) disposées sur la table de dépôt (10) et dotées de surfaces de serrage tournées l'une vers l'autre (21a, 21b),
un dispositif de guidage de mâchoires de serrage (30) doté
d'une structure en cadre (31, 32, 33a, 33b),
d'au moins un premier et un second guide (35, 36) qui s'étendent parallèlement et dans le premier sens horizontal (x) avec un espacement l'un par rapport à l'autre dans un second sens horizontal (y) transversalement au premier sens horizontal, et
au moins quatre patins de mâchoires de serrage (40a, 40b, 41a, 41b) couplés aux guides (35, 36) et entraînés dans le second sens horizontal (y), respectivement deux premiers patins de mâchoires de serrage (40a, 40b) étant associés au premier guide (35) et deux seconds patins de mâchoires de serrage (41a, 41b) au second guide et respectivement au moins deux patins de mâchoires de serrage (40a, 41a ; 40b, 41b) espacés dans le premier sens horizontal (x) étant couplés à une mâchoire de serrage (20a, 20b), et une unité d'entraînement (60, 61a, 61b, 62a, 62b) couplée au dispositif de guidage de mâchoires de serrage, grâce à laquelle unité de traitement le dispositif de guidage de mâchoires de serrage (30) est entraîné dans le premier sens horizontal (x),
**caractérisée en ce que** le dispositif de guidage de mâchoires de serrage (30) présente au moins deux éléments d'entraînement couplés à une unité d'entraînement (50), un premier élément d'entraînement étant connecté au premier patin de mâchoire de serrage (40a, 40b) et un second élément d'entraînement étant connecté au second patin de mâchoire de serrage (41a, 41b), le premier et le second élément d'entraînement étant disposés dans le premier sens horizontal (x) à distance l'un de l'autre.

2. Unité de commande (1) pour dispositif de préparation de commandes comportant des surfaces de stockage horizontales pour le stockage de marchandises unitaires, présentant :
une table de dépôt (10) s'étendant dans un premier sens horizontal (x) et dotée d'un côté de mise en stock et de sortie de stock (15),
deux mâchoires de serrage étirées en longueur (20a, 20b) disposées sur la table de dépôt (10) et dotées de surfaces de serrage tournées l'une vers l'autre (21a, 21b),
un dispositif de guidage de mâchoires de serrage (30) doté
d'une structure en cadre (31, 32, 33a, 33b),
d'au moins un premier et un second guide (35,36) qui s'étendent parallèlement et dans le premier sens horizontal (x) avec un espacement l'un par rapport à l'autre dans un second sens horizontal (y) transversalement au premier sens horizontal, et
au moins quatre patins de mâchoires de serrage (40a, 40b, 41a, 41b) couplés aux guides (35, 36) et entraînés dans le second sens horizontal (y), respectivement deux premiers patins de mâchoires de serrage (40a, 40b) étant associés au premier guide (35) et deux seconds patins de mâchoires de serrage (41a, 41b) au second guide et respectivement au moins deux patins de mâchoires de serrage (40a, 41a ; 40b, 41b) espacés dans le premier sens horizontal (x) étant couplés à une mâchoire de serrage (20a, 20b), et une unité d'entraînement (60, 61a, 61b, 62a, 62b) couplée au dispositif de guidage de mâchoires de serrage, grâce à laquelle unité de traitement le dispositif de guidage de mâchoires de serrage (30) est entraîné dans le premier sens horizontal (x),
**caractérisée en ce que** le dispositif de guidage de mâchoires de serrage (30) présente au moins quatre éléments d'entraînement (45a, 45b, 46a, 46b) couplés à une unité d'entraînement (50), deux premiers éléments d'entraînement (45a, 45b) étant connectés au premier patin de mâchoire de serrage (40a, 40b) et deux seconds éléments d'entraînement (46a, 46b) étant connectés au second patin de mâchoire de serrage (41a, 41b), les premiers et les seconds éléments d'entraînement (45a, 45b ; 46a, 46b) étant disposés dans le premier sens horizontal (x) à distance les uns des autres.

3. Unité de commande (1) au dispositif de préparation de commande selon la revendication 2, **caractérisée en ce que** les éléments d'entraînement (45a, 45b, 46a, 46b) sont réalisés sous forme de crémaillères.

4. Unité de commande (1) au dispositif de préparation de commande selon la revendication 3, **caractérisée en ce que** l'unité d'entraînement (50) présente au moins deux propulsions (51, 52) dotées respectivement d'un engrenage d'entraînement (55, 56) et que les premier et second éléments d'entraînement (45a, 45b ; 46a, 46b) réalisés sous forme de crémaillères sont respectivement disposés face-à-face, un engrenage d'entraînement (55, 56) étant respectivement disposé au centre entre les premier et second éléments d'entraînement (45a, 45b ; 46a, 46b), de sorte que les patins de mâchoires de serrage (40a, 40b ; 41a, 41b) associés à un guide (35, 36) sont entraînés de manière synchrone.

5. Unité de commande (1) au dispositif de préparation de commande selon une des revendications 1 à 4, **caractérisée en ce qu'**un élément (31) de la structure en cadre (31, 32, 33a, 33b) entoure la table de dépôt (10) et est couplé à l'unité d'entraînement (60, 61a, 61b, 62a, 62b) disposée en dessous de la table de dépôt (10) pour faire bouger le dispositif de guidage de mâchoires de serrage (30).

6. Unité de commande (1) au dispositif de préparation de commande selon une des revendications 1 à 5, **caractérisée en ce que** l'unité d'entraînement (60, 61a, 61b, 62a, 62b) permettant le mouvement du dispositif de guidage de mâchoires de serrage (30) est réalisée sous forme d'une propulsion linéaire avec des pièces en mouvement (61a, 61b) et des pièces fixes (62a, 62b).

7. Unité de commande (1) au dispositif de préparation de commande selon une des revendications 1 à 6, **caractérisée en ce que** la table de dépôt (10) présente une ouverture (11) s'étendant dans le premier sens horizontal (x) et dans laquelle un dispositif coulissant (12) est mobile dans le premier sens horizontal (x), le dispositif coulissant (12) étant couplé à une propulsion (6).

8. Unité de commande (1) au dispositif de préparation de commande selon une des revendications 1 à 7, **caractérisée en ce qu'**au moins une section (22a, 22b) des surfaces de serrage (21a, 21b) des mâchoires de serrage (20a, 20b) présente un matériau antidérapant.
